# EUROPÄISCHE PATENTANMELDUNG

(11) **EP 1 445 241 A1**
(43) Veröffentlichungstag der Anmeldung: **11.08.2004**
(21) Anmeldenummer: 04010548.8
(22) Anmeldetag: 30.03.2001
(51) Int. Cl.: C03B 5/20, C03B 5/03, C03B 5/027

(54) **Vorrichtung zum Herstellen einer Glasschmelze**

(30) Priorität: 05.04.2000 DE 10016872
(62) Teilanmeldung aus: 01933780.7
(71) Anmelder: Schott Glas, 55122 Mainz (DE); CARL-ZEISS-STIFTUNG trading as SCHOTT GLASWERKE, 55122 Mainz (DE)
(72) Erfinder: Duchs, Klaus-Dieter, Dr., 65232 Taunsstein (DE); Karetta, Frank, Dr., 67596 Dittelsheim-Hessloch (DE); Ott, Franz, 95666 Mitterteich (DE); Breitfelder, Siegfried, 07743 Jena (DE)
(74) Vertreter: Dr. Weitzel & Partner

(57) **Zusammenfassung**

Die Erfindung betrifft Vorrichtung zum Herstellen einer Glasschmelze aus Gemenge;
- mit einer Schmelzwanne (1), die Umfangswände und einen Boden (1.5) aufweist;
- mit einem Abzugskanal (2), der sich unter dem Boden (1.5) der Schmelzwanne befindet und der über eine Eintrittsöffnung mit dem Schmelzbad in leitender Verbindung steht und im Bereich einer Umfangswand der Schmelzwanne eine Austrittsöffnung (2.4) für die fertige Schmelze aufweist;
- mit wenigstens einer Heizeinrichtung zum Beheizen des Schmelzbades (3); gekennzeichnet durch die folgenden Merkmale:
   - im Bereich oberhalb des Abzugskanales (2) und der Austrittsöffnung (2.4) für die fertige Schmelze ist ein beheiztes Gewölbe (20) vorgesehen;
   - zwecks Bildens einer blanken Glasbadoberfläche (21) wird in den genannten Bereich kein Gemenge eingelegt.

## Beschreibung

Die Erfindung betrifft eine Vorrichtung zum Herstellen einer Glaschmelze aus einem Gemenge. Eine solche Vorrichtung zum Herstellen einer Glasschmelze ist meist von rechteckigem Grundriss. Sie weist Umfangswände sowie einen Boden auf. Sie ist ausserdem mit einer elektrischen Heizung ausgerüstet. Hierbei können auch mehrere Heizkreise vorgesehen sein. Das Aufheizen erfolgt über Elektroden. Es findet hierbei ein direkter Stromfluss durch die leitfähige Glasschmelze hindurch statt.

Unter dem Boden der Schmelzwanne befindet sich ein Abzugskanal. Der Abzugskanal ist gegen das Schmelzbad hin völlig offen. Der Kanal verläuft im wesentlichen horizontal, und damit in einer zum Schmelzenspiegel parallelen Ebene. Er weist einen Auslass auf, der sich im Bereich einer der Seitenwände der Schmelzwanne befindet.

Im Betrieb ist die Glasschmelze stets von einer kalten Gemenge-Abdeckung abgedeckt. Die Wanne wird daher auch als "Cold-Top-Schmelzwanne" bezeichnet. Dabei wird darauf geachtet, dass der Spiegel der Glasschmelze stets von Gemenge abgedeckt ist. An den Rändern der Schmelzfläche, d.h. an den Umfangswänden, wird jedoch in der Regel ein sogenannter Glühstreifen freigelassen, der zur Entgasung der Schmelze dient. Dies kann über eine Einlegemaschine gesteuert werden. Die auf der Glasschmelze liegende Gemengeschicht hat nämlich eine Isolierwirkung. Ist die Gemengeschicht nicht geschlossen, so kommt es zu Wärmeabstrahlungen, was Energieverluste bedeutet. Es wird somit stets Gemenge in entsprechendem Maße nachgeführt.

Zum Erzielen einer einwandfreien Qualität ist es absolut unerlässlich, dass durch den Abzugskanal völlig geschmolzenes und geläutertes (blasenfreies) Glas austritt, und dass nicht noch ungeschmolzenes Gemenge mitgeführt wird. Auch kleine Quanten von ungeschmolzenem oder nur angeschmolzenen Gemenge sind nicht akzeptabel im Hinblick auf die zu erzielende Glasqualität.

Es werden in dieser Richtung alle Anstrengungen unternommen. Hierzu gehört u. a. das richtige Anordnen der Heizkreise und der zugehörenden Elektroden, sowie das Einbringen einer genügend hohen elektrischen Leistung. Trotz dieser Maßnahmen kommt es vor, dass nicht oder nur ungenügend geschmolzenes Gemenge sowie nicht vollständig geläutertes Glas zusammen mit dem Strom der Glasschmelze durch den Abzugskanal gelangt, was bei der Weiterverarbeitung außerordentlich stört und eine ungenügende Glasqualität zur Folge hat.

DE 1 080 740 B beschreibt eine Vorrichtung zum Herstellen einer Glasschmelze aus Gemenge, wobei die beheizte Schmelzwanne einen Abzugskanal aufweist, dessen Eintrittsöffnung in einem Bereich des Bodens der Schmelzwanne angeordnet ist. Der Abzugskanal befindet sich unter dem Boden der Schmelzwanne und hat im Bereich einer Umfangswand eine Austrittsöffnung. Dabei ist der Abzugskanal zumindest an zwei Ecken direkt an die Wandung der Wanne herangeführt.

US 4 410 997 A beschreibt eine Vorrichtung zum Herstellen einer Glasschmelze aus Gemenge. Auch hier weist die beheizte Schmelzwanne einen Abzugskanal auf, der in einem zentralen Bereich des Wannenbodens verläuft. Dabei ist keine Abdeckung vorgesehen.

DE 29 17 386 A beschreibt ebenfalls eine Schmelzwanne mit einem Abzugskanal, der vom Bodenbereich der Wanne ausgeht. Eine Abdeckung des Abzugskanales ist hierbei nicht vorgesehen.

Der Erfindung liegt die Aufgabe zugrunde, eine Schmelzwanne der beschriebenen Art derart zu gestalten, dass ein vollständiges Aufschmelzen des Gemenges sowie eine vollständige Läuterung des Glases gewährleistet ist, und dass nicht die geringsten Gemengeanteile und blasenbehaftetes Glas in den Abzugskanal gelangen und zusammen mit dem übrigen Glasstrom durch dessen Austrittsöffnung hindurchtreten.

Diese Aufgabe wird durch die unabhängigen Ansprüche gelöst.

Die Erfinder haben folgendes erkannt:
Der genannte, gegen das Schmelzbad hin offene Abzugskanal befindet sich ausserhalb des Hauptbereiches der elektrischen Heizung. Dort sind die auftretenden Strömungsgeschwindigkeiten vergleichsweise gering. Hierbei kann das Glas der Glasschmelze in gewissen Bereichen abstehen. Im Bereich der Umfangswand, in der sich auch der Auslass befindet, baut sich eine überwiegend nach unten gerichtete Strömung auf. Durch diese Strömung ist es möglich, dass nicht vollständig aufgeschmolzenes Gemenge oder nicht vollständig geläutertes Glas direkt in die Entnahmeströmung im Abzugskanal eintritt und die genannten nachteiligen Folgen hervorruft.

Zur Lösung der Aufgabe schlagen die Erfinder die vier folgenden Lösungswege vor, die jeweils für sich alleine oder in Kombination angewandt werden können.

Der erste Weg besteht in folgendem:
Der Abzugskanal wird auf einem Teil seiner Erstreckung abgedeckt. Es verbleibt lediglich eine Öffnung, die sich im Bereich der Wirkung der Heizkreise befindet. Im allgemeinen wird diese Eintrittsöffnung in den Abzugskanal in einem zentralen Bereich des Wannenbodens angeordnet sein. Der Wannenboden ist somit - bis auf die Eintrittsöffnung in den Abzugskanal - gleichzeitig die Abdeckung des Abzugskanales. Man könnte auch sagen, dass der Kanal weitgehend abgedeckt ist. Die Abdeckung erstreckt sich vom Bereich seiner Austrittsöffnung zu einem zentralen Bereich des Wannenbodens hin, zweckmäßigerweise jedoch mindestens bis zu einem Zehntel des Abstandes zwischen zwei einander gegenüberliegenden Umfangswänden der Schmelzwanne.

Es wird somit verhindert, dass nicht vollständig aufgeschmolzene Gemengeanteile sowie blasenbehaftetes Glas aus dem Bereich der Wanne über dem Kanal direkt in den Kanal und damit in die Entnahmeströmung gelangen können. Somit lässt sich eine perfekte Glasqualität erzielen, vorausgesetzt, dass alle anderen Parameter in Ordnung sind.

Als Material für die genannte Abdeckung - d.h. die Trennwand zwischen der Glasschmelze und dem Kanal - kommen feuerfeste Materialien (metallisch oder nichtmetallisch) mit geringer Korrosion, hoher Standzeit, niedrigen Kosten und einem niedrigen Glasfehler-Potential in Betracht. Hier bieten sich Refraktärmetalle wie Molybdän oder Wolfram sowie deren Legierungen an.

Der zweite Lösungsweg besteht in folgendem:
Es wird eine Abdeckung vorgesehen, beispielsweise aus jenem Material, aus dem auch die Wanne besteht. Die Abdeckung deckt einen Teil des Spiegels der Schmelzfläche ab. Die Schmelzfläche wird somit verkleinert. Dies führt zu einer günstigen Beeinflussung der Glasströmung, da die Wärmeabfuhr über die Abdeckung geringer ist, als über die Gemengedecke, und da sich somit unterhalb der Abdeckung eine thermische Barriere aufbaut. Dadurch wird verhindert, dass nicht vollständig aufgeschmolzenes Gemenge oder nicht vollständig geläutertes Glas direkt in die Entnahmeströmung gelangen kann. Auf diese Weise verbleiben nicht vollständig aufgeschmolzene Gemengeanteile länger in der Schmelzwanne und werden vollständig aufgeschmolzen und geläutert. Das Ergebnis ist dasselbe, wie bei dem ersten Lösungsweg.

Der dritte Lösungsweg besteht darin, im Bereich des Abzugskanals eine Zusatzheizung vorzusehen, und zwar im Bereich oberhalb des Auslasses des Abzugskanals, dort, wo der Glasstrom die Wanne verläßt. Die Wirkung dieser Zusatzheizung besteht im Aufbau einer thermischen Barriere, durch die verhindert wird, dass nicht vollständig aufgeschmolzenes Gemenge oder nicht vollständig geläutertes Glas direkt in die Entnahmeströmung gelangen kann.

Der vierte Lösungsweg besteht darin, im Bereich oberhalb des Auslasses des Abzugskanals, dort, wo der Glasstrom die Wanne verlässt, ein beheiztes Gewölbe (zum Beispiel durch Brenner) anzubringen und in diesem Bereich kein Gemenge einzulegen. Es stellt sich somit dort eine blanke Glasoberfläche ein, durch die Energie aus dem beheizten Gewölbe in das Glasbad eintreten kann. Wie im zweiten und dritten Lösungsweg wird somit eine thermische Barriere aufgebaut, durch die verhindert wird, dass nicht vollständig aufgeschmolzenes Gemenge oder nicht vollständig geläutertes Glas direkt in die Entnahmeströmung gelangen kann. Durch alle vier Lösungen wird somit ein vollständiges Aufschmelzen des Gemenges und eine ausreichende Läuterung der Glasschmelze gewährleistet. Es wird verhindert, dass irgendwelche Gemengepartikel, die nicht vollständig aufgeschmolzen sind, oder blasenbehaftetes Glas in den Abzug gelangen und somit mit dem Glasstrom die Schmelzwanne verlassen.

Die Erfindung sowie der Stand der Technik sind anhand der Zeichnung näher erläutert. Darin ist im einzelnen folgendes dargestellt:
- Figur 1: zeigt eine Vorrichtung zum Herstellen einer Glasschmelze gemäß der Erfindung in Draufsicht, und zwar gemäß dem ersten Lösungsweg.
- Figur 2: zeigt die Vorrichtung zum Herstellen einer Glasschmelze von Fig. 1 in einem Vertikalschnitt.
- Figur 3: zeigt eine weitere Vorrichtung zum Herstellen einer Glasschmelze, und zwar gemäß dem zweiten Lösungsweg.
- Figur 4: zeigt den Gegenstand von Figur 3 in einem Vertikalschnitt.
- Figur 5: zeigt eine weitere Vorrichtung zum Herstellen einer Glasschmelze gemäß dem dritten Lösungsweg.
- Figur 6: zeigt den Gegenstand von Figur 5 in einem Vertikalschnitt.
- Figur 7: zeigt eine Vorrichtung zum Herstellen einer Glasschmelze gemäß dem vierten Lösungsweg.
- Figur 8: zeigt den Gegenstand von Figur 7 in einem Vertikalschnitt.

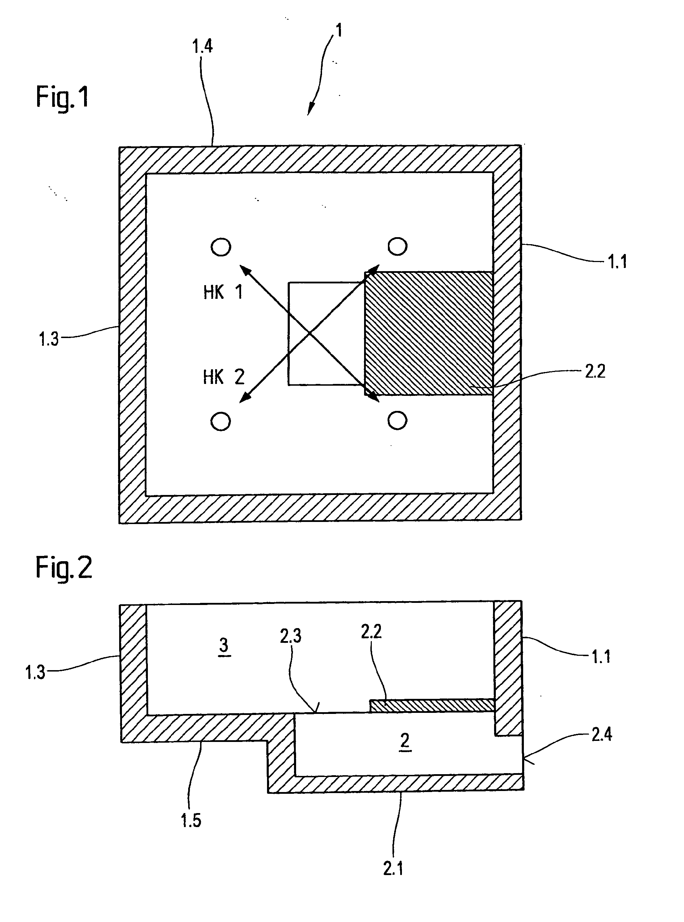

Die in den Figuren 1 und 2 dargestellte, erfindungsgemäße Vorrichtung umfasst eine Schmelzwanne 1. Diese ist rechteckig. Sie weist vier Umfängswände 1.1 bis 1.4 auf, ferner einen Boden 1.5.

Die Wanne wird elektrisch beheizt, zum Beispiel durch zwei Heizkreise HK1 und HK2. Diese Heizkreise koppeln die notwendige Heizenergie in die zu erzeugende Glasschmelze 3 ein.

Unter dem Boden befindet sich ein Abzugskanal 2.
Der Abzugskanal 2 hat ebenfalls einen Boden 2.1. Der Boden verläuft im dargestellten Ausführungsbeispiel horizontal. Der Kanal ist an seiner Oberseite durch eine Abdeckung 2.2 abgedeckt. Wie man sieht, befindet sich die Abdeckung 2.2 etwa auf der Höhe des Bodens 1.5. Sie schließt an die Umfangswand 1.1 der Schmelzwanne 1 an und erstreckt sich bis etwa zu einem Drittel des Abstandes zwischen den Umfangswänden 1.1 und 1.3. Aufgrund der Gestaltung und Anordnung der Abdeckung 2.2 relativ zum Boden 1.5 verbleibt eine Öffnung 2.3. Dies ist die Eintrittsöffnung, durch welche Glasschmelze aus dem von der eigentlichen Schmelzwanne 1 umschlossenen Raum in den Abzugskanal 2 gelangt. Der Abzugskanal 2 weist eine Austrittsöffnung 2.4 auf. Wie man sieht, befindet sich diese im Bereich der Umfangswand 1.1 der Schmelzwanne 1.

Die Energie der Heizkreise erfasst den größten Teil des Schmelzbades 3. Dort kommt es zu einer Konvektion, die auch die abgelegenen Winkel des Schmelzwannen-Innenraumes erfasst. Es gelangt somit nur Glas in vollständig aufgeschmolzener und geläuterter Form durch die Eintrittsöffnung 2.3 in den Abzugskanal 2, und damit durch dessen Austrittsöffnung 2.4 zur Weiterverarbeitung.

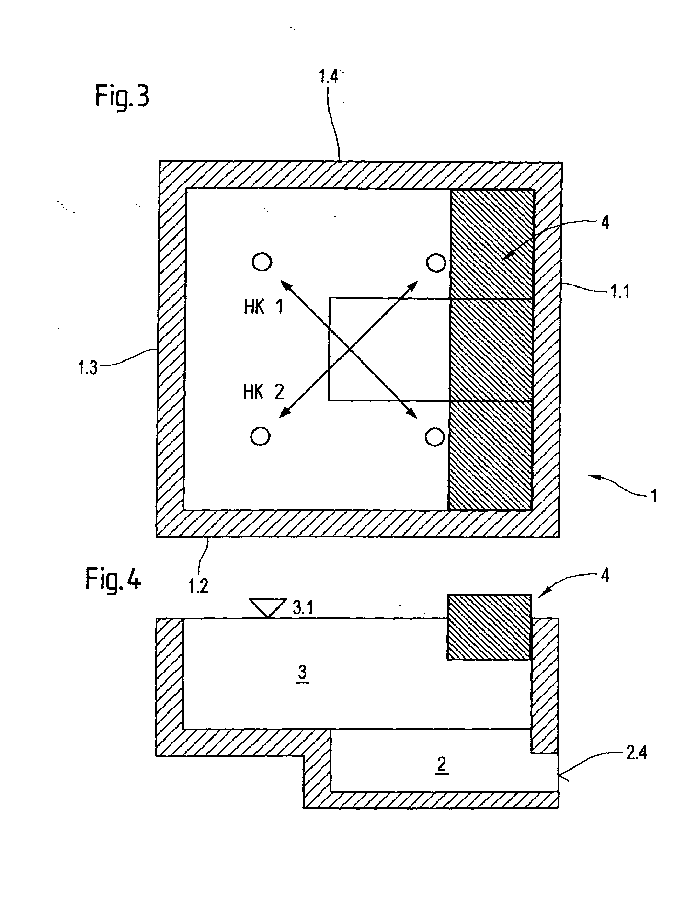

Bei der in den Figuren 3 und 4 dargestellten Ausführungsform erkennt man wiederum eine Schmelzwanne 1 mit ihren Umfangswänden 1.1, 1.2, 1.3 und 1.4. Auch sind wiederum zwei Heizkreise HK1 und HK2 zugeordnet, die Heizenergie in die zu erzeugende Glasschmelze 3 einkoppeln.

Gemäß der Erfindung ist eine Abdeckung 4 vorgesehen. Die Abdeckung besteht in diesem Falle aus Steinen aus feuerfestem Material. Die Abdeckung erstreckt sich über die gesamte Länge der Umfangswand 1.1 zwischen den beiden Umfangswänden 1.2 und 1.4. Sie tauchen teilweise in das Schmelzbad 3 ein, teilweise ragen sie aus dem Schmelzbad über dessen Spiegel 3.1 hinaus.
Die Abdeckung 4 kann aber auch eine andere Form haben. Sie muß sich nicht über die ganze Umfangswand 1.1 erstrecken. Sie kann sich auch an anderen der Umfangswände entlang erstrecken, so dass die Fläche des Spiegels 3.1 noch stärker verkleinert wird, als hier dargestellt. Außerdem muß die Abdeckung 4 nicht unbedingt in das Schmelzbad 3 eintauchen. Eine Berührung mit dem Spiegel 3.1 reicht aus. Es könnte sogar ein gewisser Abstand zwischen der Unterkante der Abdeckung und dem Spiegel 3.1 verbleiben.

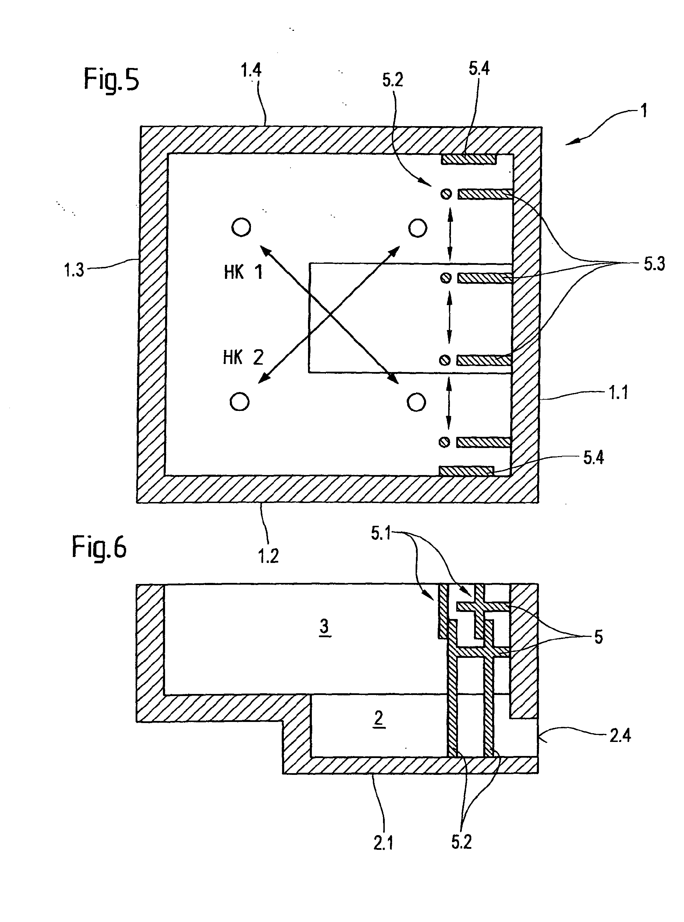

Bei der Ausführungsform gemäß der Figuren 5 und 6 sind wiederum im Bereich der Umfangswand 1.1 der Wanne 1 besondere Heizstrecken 5 vorgesehen - zusätzlich zu den Heizkreisen HK1 und HK2. So erkennt man in Figur 6 Stabelektroden 5.1 als Top-Elektroden. Man erkennt ferner Stabelektroden 5.2 als Boden-Elektroden. Ferner sind Stabelektroden 5.3 als Seiten-Elektroden vorgesehen, die unmittelbar an die Umfangswand 1.1 angrenzen. Schließlich erkennt man an der Umfangswand 1.2 und an der Umfangswand 1.4 je eine Plattenelektrode 5.4. Die Elektrodentypen 5.1 bis 5.4 können entweder alternativ oder in Kombination verwendet werden. Dabei kann eine einzige Elektrodenreihe vorgesehen werden, aber auch mehrere Elektrodenreihen.

Räumliche Ausdehnung des Bereiches der zusätzlich beheizt wird:
- Glasflussrichtung: 5 bis 50 % der Wannenlänge, vorzugsweise 5 bis 25 %
- quer zur Glasflussrichtung: mindestens der Bereich über dem Kanal muß beeinflusst werden, bis zur gesamten Wannenbreite
- Höhe: 10 bis 100 % der Schmelzbeckenhöhe, ausgehend von der theoretischen Glaslinie, vorzugsweise 10 bis 50 %

Ausführung der Heizstrecken:
- Elektroden: Stab, Platte, Block, Kalotte
- Einbau: Seitenelektroden (Seitenwände oder Rückwand), Top-Elektroden, Boden-Elektroden (wobei Höhe 10 bis 100 % Glasstand, vorzugsweise 50 bis 80 %)
- bei Stabelektroden: auch mit einem Winkel ungleich 90° zur Wand.

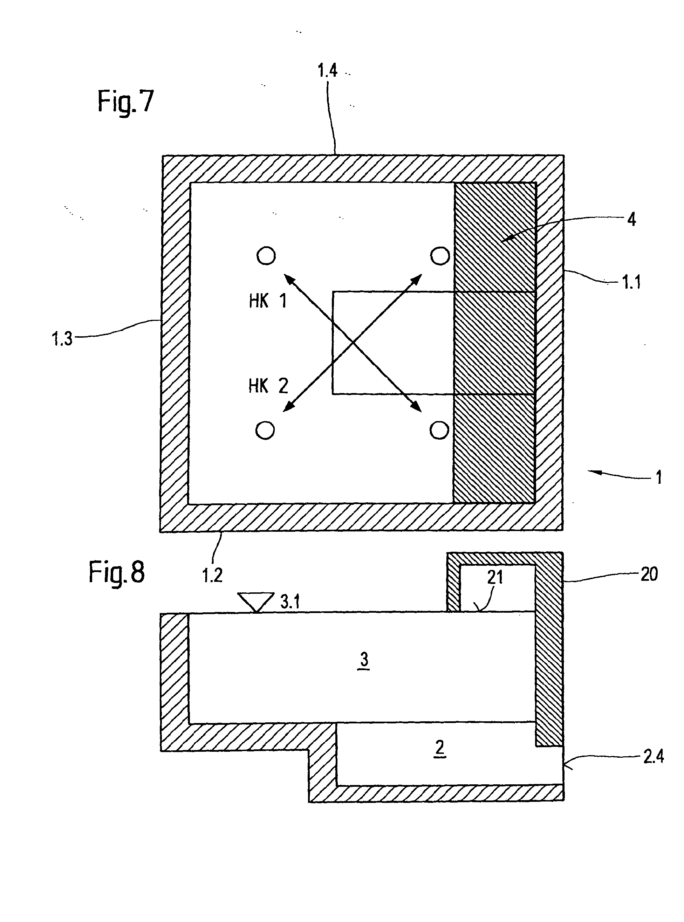

Die Figuren 7 und 8 zeigen eine Einrichtung ähnlich jener gemäß der Figuren 3 und 4. Jedoch ist hierbei ein beheiztes Gewölbe 20 vorgesehen. Dieses sorgt dafür, dass eine blanke Glasoberfläche 21 verbleibt. In diesem Bereich wird kein Gemenge eingelegt.

## Patentansprüche

1. Vorrichtung zum Herstellen einer Glasschmelze aus Gemenge;
1.1 mit einer Schmelzwanne (1), die Umfangswände (1.1 bis 1.4) und einen Boden (1.5) aufweist;
1.2 mit einem Abzugskanal (2), der sich unter dem Boden (1.5) der Schmelzwanne (1) befindet und der über eine Eintrittsöffnung (2.3) mit dem Schmelzbad (3) in leitender Verbindung steht und im Bereich einer Umfangswand (1.1) der Schmelzwanne (1) eine Austrittsöffnung (2.4) für die fertige Schmelze aufweist;
1.3 mit wenigstens einer Heizeinrichtung zum Beheizen des Schmelzbades (3); **gekennzeichnet durch** die folgenden Merkmale:
1.4 im Bereich oberhalb des Abzugskanales (2) und der Austrittsöffnung (2.4) für die fertige Schmelze ist ein beheiztes Gewölbe vorgesehen;
1.5 zwecks Bildens einer blanken Glasbadoberfläche wird in den genannten Bereich kein Gemenge eingelegt.

2. Vorrichtung nach Anspruch 1, **dadurch gekennzeichnet, dass** die Schmelzwanne (1) rechteckig ist.
